# EUROPEAN PATENT APPLICATION

(11) **EP 4 424 799 A1**
(43) Date of publication of application: **04.09.2024**
(21) Application number: 22886071.4
(22) Date of filing: 27.10.2022
(51) Int. Cl.: C10G 9/18, C10G 9/20, C10G 9/36

(54) **CRACKING REACTION DEVICE, METHOD FOR PREPARING OLEFINS BY MEANS OF CRACKING, AND APPLICATION**

(30) Priority: 28.10.2021 CN 202111263241
(71) Applicant: China Petroleum & Chemical Corporation, Beijing 100728 (CN); BEIJING RESEARCH INSTITUTE OF CHEMICAL INDUSTRY, CHINA PETROLEUM & CHEMICAL CORPORATION, Chaoyang District Beijing 100013 (CN)
(72) Inventor: LIU, Tongju, Beijing 100013 (CN); WANG, Guoqing, Beijing 100013 (CN); ZHANG, Lijun, Beijing 100013 (CN); ZHOU, Cong, Beijing 100013 (CN); DU, Zhiguo, Beijing 100013 (CN); ZHANG, Zhaobin, Beijing 100013 (CN); SHI, Ying, Beijing 100013 (CN); LIU, Junjie, Beijing 100013 (CN); JIANG, Bing, Beijing 100013 (CN); BA, Haipeng, Beijing 100013 (CN)
(74) Representative: Hoffmann Eitle
(86) International application number: PCT/CN2022/127962
(87) International publication number: WO 2023/072196

(57) **Abstract**

The invention relates to the field of cracking, and discloses a cracking reaction device, a method and use of producing olefins by cracking. The cracking reaction device of the present application includes a preheating section, a lightening section, a reduced-pressure gasification section and a cracking section that are connected sequentially. The method for producing olefins by cracking in the present application includes pressurizing a cracking feedstock and water; subjecting the pressurized cracking feedstock and water to a first heating; subjecting the first heated cracking feedstock and water to a second heating and lightening the cracking feedstock in the presence of water to obtain a lightened mixture; gasifying the lightened mixture under a reduced pressure and subjected to a third heating to obtain a third heated mixture; and cracking the third heated mixture at a cracking temperature in the presence of steam to obtain a cracked product containing olefins.

## Description

### Technical field

The present invention relates to the field of cracking, specifically to a cracking reaction device, and a method and a use for preparing olefins by cracking.

### Background techniques

Lower olefins usually include mainly unsaturated hydrocarbons such as ethylene, propylene, butylene, butadiene, and the like and are organic chemical raw materials with high economic value. With the development of economy, the demand for these organic chemical raw materials is increasing year by year. Naphtha has long been used as the main raw material for the preparation of lower olefins. However, in recent years, associated gas from Middle Eastern oil fields and shale gas from the United States, which are cheap, have been widely used as raw materials for ethylene, resulting in reduced prices of ethylene-related products. In order to cope with the impact of market competition, expanding the sources of raw materials for ethylene cracking reaction devices and reducing raw material costs have become an effective means for traditional ethylene enterprises to reduce costs and increase efficiency. Therefore, the using of heavy hydrocarbons, especially unprocessed crude oil, as raw materials for cracking reaction devices for producing lower olefins contributes to the reducing of raw material costs and energy consumption of olefin production, so as to adapt quickly to changes in the supply and demand of cracking feedstocks in the market.

In order to make full use of crude oil resources and to increase the yield of lower olefins, steam cracking is usually used to crack various hydrocarbon raw materials into olefins using a cracking reaction device. A commonly used cracking reaction device includes a convection section and a radiant section.

Steam cracking has been used to crack a variety of hydrocarbon raw materials into olefins, preferably lower olefins such as ethylene, propylene, butene and butadiene. The conventional steam cracking uses a cracking furnace with two main sections: a convection section and a radiant section. The hydrocarbon feedstock generally enters the convection section of the cracking furnace as a liquid, where it is heated and gasified, generally by indirect contact with hot flue gas from the radiant section and direct contact with steam. The mixture of the gasified feedstock and steam is then introduced into the radiant section where cracking occurs. The product comprising olefins leaves the cracking furnace for further downstream processing including quenching.

CN101583697A discloses a method for cracking a feedstock containing synthetic oil. The method includes the blending of existing ethylene-production raw materials into crude oil, to dilute the crude oil, improve the cracking performance of the crude oil, and increase the conversion rate of olefins. However, this method is limited by the sources of the existing ethylene-production raw materials and cannot effectively utilize large amounts of crude oil to produce lower olefins.

CN109651041A discloses a method for preparing lower olefins. The method includes the following steps: (1) contacting heavy oil and supercritical carbon dioxide and separating to obtain a light fluid phase containing light oil and carbon dioxide, and a heavy fluid phase containing heavy oil; (2) subjecting the light fluid phase containing light oil and carbon dioxide to a component separation to obtain light oil and carbon dioxide; (3) subjecting the light oil to a steam thermal cracking to obtain lower olefins. Although this method uses carbon dioxide to treat heavy oil and improves the properties of the crude oil to a certain extent, it still has the problem of short operation cycle of the cracking reaction device.

When above methods are used to crack crude oil, the crude oil utilization rate is low, the yield of lower olefins is low, and the cracking reaction device is easy to coke and has a short operation cycle.

### Contents of the invention

The objects of the present invention are to overcome the technical problems of low crude oil utilization rate, low yield of lower olefins and short operation cycle of cracking reaction device present in prior art, and to provide a cracking reaction device, and a method and use for preparing olefins by cracking.

Crude oil comprises high molecular weight non-volatile components. The inventors of the present invention found that when these non-volatile components are preheated in the convection section of a conventional cracking reaction device, a small portion thereof is not gasified; the non-gasified non-volatile components are entrained by the mixed gas flow to the radiant section, causing easily coking deposition in the radiant section, or even blocking the radiant section, impairing the yield of cracked product and shortening the operation cycle of the device. Thus, the present invention converts at least a portion of heavy component macromolecules in the crude oil into smaller molecules by subjecting the crude oil to a lightening reaction in water, thereby providing raw materials more suitable for steam thermal cracking. Moreover, the water required for lightening can also serve as diluting steam in the cracking section. In addition, by firstly depressurizing and heating the product obtained after lightening reaction and then carrying out the cracking reaction, the crude oil utilization rate and the yield of lower olefins can be further improved, the coking of the cracking reaction device can be reduced, and the operation duration of the cracking reaction device can be extended.

The first aspect of the present invention provides a cracking reaction device, which includes a preheating section, a lightening section, a reduced-pressure gasification section and a cracking section that are connected sequentially.

In some embodiments, the lightening section includes a lightening container, preferably a lightening kettle.

In some embodiments, the preheating section includes a heating container or a heat exchanger. In some embodiments, the reduced-pressure gasification section includes a reduced-pressure gasification container. In some embodiments, the cracking section includes a cracker.

In some embodiments, the cracking reaction device includes one or more reaction tubes, and each reaction tube includes said sequentially connected preheating section, lightening section, reduced-pressure gasification section and cracking section. The arrangement of the reaction tube(s) can be horizontal type, vertical type or hanging type.

In some embodiments, the cracking reaction device further includes a pressurizing section before the preheating section, and/or a quenching section after the cracking section.

In some embodiments, a pressure-reducing means is arranged between the lightening section and the reduced-pressure gasification section to reduce the pressure of the material entering into the reduced-pressure gasification section. Preferably, the pressure-reducing means is a pressure reducing valve, a pressure control valve or a throttling element.

In some embodiments, the temperatures of the preheating section, the lightening section, the reduced-pressure gasification section and the cracking section are sequentially increased. Preferably, the temperatures of the preheating section, lightening section, decomposition gasification section and cracking section are 150-250 °C, 350-450 °C, 550-650 °C and 770-880 °C, respectively.

In some embodiments, the preheating section is a double-layer tube or a tube with more than two layers. In some embodiments, helical protrusions are arranged on the inner side and/or the outer side of wall of the inner layer tube, and/or on the tube wall(s) of the intermediate layer(s), and/or on the inner side of wall of the outer layer tube of the double-layer tube or the tube with more than two layers.

In some embodiments, the ratio of the internal diameter of the inner layer tube to the internal diameter of the outer layer tube of the double-layer tube is 0.1-0.9, preferably 0.4-0.6. In some embodiments, the helical protrusions in adjacent tube layers have opposite helical directions. In some embodiments, the spiral height-to-diameter ratio of the helical protrusions is 0.1-20, preferably 1-10. In some embodiments, the protrusion height-to-diameter ratio of the helical protrusions is 0.01-0.5, preferably 0.02-0.1.

In some embodiments, the pressurizing section is provided with a pressurizing equipment; preferably, the pressurizing equipment is a pump.

In some embodiments, the volume ratio of the preheating section, the lightening section, the reduced-pressure gasification section and the cracking section is 0.1-10:0.1-1000:0.1-10:1, preferably 0.1-0.5:1-300:0.1-0.5:1.

The second aspect of the present invention provides a cracking reaction device, which includes: a pressurizing section, a preheating section, a lightening section, a reduced-pressure gasification section, a cracking section and a quenching section that are sequentially connected, a cracking feedstock inlet, and a cracked product outlet, the cracking feedstock inlet is arranged in the preheating section, and the cracked product outlet is arranged in the quenching section, wherein the preheating section, the lightening section, the reduced-pressure gasification section, the cracking section and the quenching section are each equipped with a temperature control means to control the temperature of each section during operation; a pressure-reducing means is arranged between the lightening section and the reduced-pressure gasification section to reduce the pressure of the material entering into the reduced-pressure gasification section; the structure of the preheating section is a double-layer tube, and helical protrusions are arranged on the inner side of wall of the inner layer tube and/or the inner side of wall of the outer layer tube of the double-layer tube.

In some embodiments, the ratio of the internal diameter of the inner layer tube to the internal diameter of the outer layer tube of the double-layer tube is 0.1-0.9, preferably 0.4-0.6. In some embodiments, the helical protrusions on the inner side of wall of the inner layer tube have a helical direction opposite to that of the helical protrusions on the inner side of wall of the outer layer tube. In some embodiments, the spiral height-to-diameter ratio of the helical protrusions on the inner side of wall of the inner layer tube is 0.1-20, preferably 1-10. In some embodiments, the spiral height-to-diameter ratio of the helical protrusions on the inner side of wall of the outer layer tube is 0.1-20, preferably 1-10. In some embodiments, the protrusion height-to-diameter ratio of the helical protrusions on the inner side of wall of the inner layer tube is 0.01-0.5, preferably 0.02-0.1. In some embodiments, the protrusion height-to-diameter ratio of the helical protrusions on the inner side of wall of the outer layer tube is 0.01-0.5, preferably 0.02-0.1.

In some embodiments, the volume ratio of the preheating section, the lightening section, the reduced-pressure gasification section, the quenching section and the cracking section is 0.1-10 : 0.1-1000 : 0.1-10 : 0.1-10 : 1, preferably 0.1-0.5 : 1-300 : 0.1-0.5 : 0.1-0.5 : 1.

In some embodiments, the pressure-reducing means is a pressure reducing valve, a pressure control valve or a throttling element. In some embodiments, the pressurizing section is provided with a pressurizing equipment. Preferably, the pressurizing equipment is a pump.

In some embodiments, the cracking reaction device has a structure of one or more reaction tube(s). In some embodiments, the arrangement of the reaction tube(s) is horizontal type, vertical type or hanging type.

The third aspect of the present invention provides a method for producing olefins through cracking, characterized in that the method includes the steps of:
(1) pressurizing a cracking feedstock and water;
(2) subjecting the pressurized cracking feedstock and water to a first heating;
(3) subjecting the first heated cracking feedstock and water to a second heating and lightening the cracking feedstock in the presence of water to obtain a lightened mixture (which contains the lightening reaction product of the cracking feedstock);
(4) gasifying the lightened mixture under a reduced pressure and subj ected to a third heating to obtain a third heated mixture (gaseous); and
(5) cracking the third heated mixture at a cracking temperature in the presence of steam to obtain a cracked product containing olefins.

In some embodiments, the temperatures of the first heating, the second heating, the third heating and the cracking are increased sequentially; preferably, from step (2) to step (5), the temperature increase between adjacent steps is in the range of 100-250°C, preferably 150-250°C. In some embodiments, the temperatures of the first heating, the second heating, the third heating and the cracking are 150-250 °C, 350- 450 °C, 550-650 °C and 770-880 °C, respectively.

In some embodiments, the weight ratio of water and the cracking feedstock in step (1) is 0.3-10.5, preferably 0.5-5. In some embodiments, the cracking feedstock is crude oil.

In some embodiments, in step (1), after pressurization, the pressures of the cracking feedstock and water are respectively: 10-40 MPa, preferably 15-30 MPa, and more preferably 21-30 MPa. In some embodiments, in step (2), the conditions for the first heating include: a temperature lower than 350 °C, preferably 150-250 °C; a pressure of 10-40 MPa, preferably 15-30 MPa, more preferably 21-30 MPa. In some embodiments, the lightening reaction in step (3) is carried out under conditions of supercritical water or conditions close to supercritical water; preferably, the conditions for the lightening reaction include: a temperature of 350-450 °C, a pressure of 10-40 MPa, preferably 15-30 MPa, more preferably 21-30 MPa. In some embodiments, the reduced-pressure in step (4) reduces the pressure of the mixture after the lightening reaction to 0.01-0.5 MPa, preferably 0.1-0.3 MPa; and the third heating raises the temperature of the mixture after the lightening reaction to 550-650 °C. In some embodiments, the conditions for the cracking reaction in step (5) include: a temperature of 770-880 °C, preferably 780-820 °C, and a pressure of 0.01-0.5 MPa, preferably 0.2-0.3 MPa. In step (5), the residence time of the material can be 0.1-0.5 seconds.

In some embodiments, the method further includes: (6) cooling the cracked product obtained after the cracking reaction. Preferably, in step (6), the cooling makes the temperature of the cracked product not higher than 550 °C within 0.1 seconds, and the pressure is 0.01-0.5 MPa, preferably 0.2-0.3 MPa.

In some embodiments, the method can be performed in the cracking reaction device of the present application.

The fourth aspect of the present invention provides a method for producing olefins through cracking, which method includes:
(1) pressurizing a cracking feedstock and water;
(2) subjecting the pressurized cracking feedstock and water to a first heating;
(3) subjecting the first heated cracking feedstock and water to a second heating and subjecting the cracking feedstock to a lightening reaction in the presence of water;
(4) reducing the pressure of the mixture obtained after the lightening reaction and then subj ected to a third heating, to obtain a third heated mixture containing steam and the lightening reaction product of the cracking feedstock;
(5) subjecting the lightening reaction product of the cracking feedstock to a cracking reaction in the presence of steam;
(6) cooling the cracked product after the cracking reaction.

In some embodiments, the temperatures of the first heating, the second heating, the third heating and the cracking reaction are sequentially increased and the increase is in the range of 100-250 °C, preferably 150-250 °C. In some embodiments, the weight ratio of water and cracking feedstock in step (1) can be 0.3-10.5, preferably 0.5-5. In some embodiments, the cracking feedstock is at least one selecting from the group consisting of crude oil, residual oil, and heavy hydrocarbons obtained by processing crude oil.

In some embodiments, the pressure of the cracking feedstock and water after pressurization in step (1) is 10-40 MPa, preferably 21-30 MPa. In some embodiments, the conditions for the first heating in step (2) include: a temperature lower than 350 °C, preferably 150-250 °C; a pressure of 10-40 MPa, preferably 21-30 MPa. In some embodiments, the conditions for the lightening reaction in step (3) include: a temperature of 350-450 °C, and a pressure of 10-40 MPa, preferably 21-30 MPa. In some embodiments, in step (4), the reduction of pressure reduces the pressure of the mixture obtained after the lightening reaction to 0.01-0.5 MPa, preferably 0.1-0.3 MPa; the third heating raises the temperature of the mixture after the lightening reaction to 550-650 °C. In some embodiments, the conditions for the cracking reaction in step (5) include: a temperature of 770-880 °C, preferably 780-820 °C, a pressure of 0.01-0.5 MPa, preferably 0.2-0.3 MPa, and a residence time of 0.1-0.5 seconds. In some embodiments, in step (6), within 0.1 seconds, the cooling makes the temperature of the cracked product not higher than 550 °C, and the pressure is 0.01-0.5 MPa, preferably 0.2-0.3 MPa.

In some embodiments, the method can be performed in the cracking reaction device of the present application.

The fifth aspect of the present invention provides use of the above-mentioned cracking reaction device in preparing of olefins through cracking.

The cracking reaction device and/or cracking method provided by the invention can effectively improve crude oil cracking efficiency and increase olefin yield so as to reduce operation costs, and can reduce coking and blocking of the cracking device and prolong the operation duration of the cracking reaction device.

### Description of the drawings

Figure 1 is a schematic diagram of a cracking reaction device according to an embodiment of the present invention; and
Figure 2 is a structural perspective view of the preheating section of cracking reaction device according to an embodiment of the present invention.
Figure 3 is a structural perspective view of the preheating section of cracking reaction device according to another embodiment of the present invention.

As those skilled in the art will appreciate, the drawings are merely illustrative of exemplary embodiments of the present application and are not necessarily drawn to scale.

### Description of reference signs

1 water pump, 2 crude oil pump, 3 cracking feedstock inlet, 4 preheating section, 5 lightening section, 6 reduced-pressure gasification section, 7 cracking section, 8 quenching section, 9 cracked product outlet, 10 inner layer tube, 11 outer layer tube, 12 helical protrusions on the inner side of wall of the outer layer tube, 13 helical protrusions on the inner side of wall of the inner layer tube.

### Modes of carrying out the invention

The endpoints of ranges and any values disclosed herein are not limited to the precise ranges or values, but these ranges or values are to be understood to include values close to such ranges or values. For numerical ranges, the endpoint values of each range, the endpoint values of each range and individual point values, and the individual point values can be combined with each other to obtain one or more new numerical ranges, and these numerical ranges shall be deemed to be specifically disclosed herein.

Reference in this specification to "an embodiment" or "some embodiments" means that a feature, structure or characteristic described in connection with the embodiment(s) is included in at least one embodiment. In one or more embodiments, these features, structures or characteristics can be combined in any suitable manner.

The individual embodiments in this specification may be combined with each other, but combinations that violate the laws of nature and combinations that are excluded by those skilled in the art based on their professional knowledge are not included.

An aspect of the present invention provides a cracking reaction device, which includes a preheating section, a lightening section, a reduced-pressure gasification section and a cracking section that are connected sequentially.

"Cracking" as used herein has the meaning generally known in the art and refers to the decomposition of hydrocarbons into smaller hydrocarbons containing fewer carbon atoms due to the breaking of carbon-carbon bonds. Preferably, "cracking" in this application is steam cracking; said "steam cracking" has the meaning generally known in the art and refers to a thermal cracking reaction occurring in the presence of steam.

The cracking reaction device of the present application includes a preheating section, a lightening section, a reduced-pressure gasification section and a cracking section that are connected sequentially. According to some embodiments, the stream being treated passes through the preheating section, the lightening section, the reduced-pressure gasification section and the cracking section sequentially in the cracking reaction device.

In some embodiments, the cracking reaction device can also include a pressurizing section before the preheating section. In the pressurizing section, the cracking feedstock and water are pressurized to a required pressure. After being pressurized in the pressurizing section, the cracking feedstock and water are pressurized to 10-40 MPa, preferably 15-30 MPa, and more preferably 21-30 MPa. According to some embodiments, the pressure can be 15 MPa, 16MPa, 17MPa, 18MPa, 19MPa, 20 MPa, 21 MPa, 22 MPa, 23 MPa, 24 MPa, 25 MPa, 26 MPa, 27 MPa, 28 MPa, 29 MPa, 30 MPa, 31 MPa, 32 MPa, 33 MPa, 34 MPa, 35 MPa, 36 MPa, 37 MPa, 38 MPa or 39 MPa.

In some embodiments, the pressurizing section includes or is, for example, a tube that delivers cracking feedstock and water to the preheating section. In some embodiments, the pressurizing section is provided with a pressurizing equipment. Various pressurizing equipments commonly known in the art can be used. Preferably, the pressurizing equipment is a pump.

After the cracking feedstock and water are pressurized, they are delivered to the preheating section.

The preheating section is used to preheat materials, including the cracking feedstock and water. In the preheating section, the materials to be preheated, such as cracking feedstock and water, are heated to a desired temperature, such as a temperature not higher than 350°C. In some embodiments, the preheating section heats the materials to a temperature of, for example, 150-250 °C. For example, the preheating section heats the materials to 150 °C, 160 °C, 170 °C, 180 °C, 190 °C, 200 °C, 210 °C, 220 °C, 230 °C, 240 °C, 250 °C, 260 °C, 270 °C, 280 °C, 290 °C, 300 °C, 310 °C, 320 °C, 330 °C or 340 °C.

In some embodiments, the preheating section includes a heating container or heat exchanger. After the pressurized cracking feedstock and water are fed into the heating container, the cracking feedstock and water are heated to a desired temperature in the heating container. In the case of using a heat exchanger, the cracking feedstock and water are heated to a desired temperature through heat exchange. In some embodiments, the preheating section is of a tube form. In some embodiments, the preheating section is a double-layer tube or a tube with more than two layers. In some embodiments, the preheating section includes or is a section of a tubular reactor (i.e., preheating section of tubular reactor).

In the preheating section, the pressure of the materials (the cracking feedstock and water) is 10-40 MPa, preferably 15-30 MPa, more preferably 21-30 MPa.

In the present invention, the cracking feedstock can be pressurized and preheated separately, and the water can be pressurized and preheated separately, and then the pressurized and preheated cracking feedstock and the pressurized and preheated water are mixed together. Alternatively, the cracking feedstock can be pressurized separately and the water can be pressurized separately; the pressurized cracking feedstock and pressurized water are then mixed together to obtain a mixture; and the resulted mixture is heated to a desired preheating temperature. Alternatively, the cracking feedstock can be mixed with water, and the mixture can be pressurized and preheated. For example, the cracking feedstock and water can be added into a container to obtain a mixture, and then the mixture in the container is pressurized and preheated.

The preheating section is followed by the lightening section. Materials, such as the cracking feedstock and water, are sent into the lightening section after being preheated in the preheating section.

In the lightening section, the cracking feedstock and water are further heated, for example heated to a temperature of 300-540 °C, preferably 300-500 °C, more preferably 350-450 °C. For example, in the lightening section, the cracking feedstock and water are heated to 310 °C, 320 °C, 330 °C, 340 °C, 350 °C, 360 °C, 370 °C, 380 °C, 390°C, 400 °C, 410°C, 420 °C, 430°C, 440 °C, 450 °C, 460 °C, 470°C, 480 °C, 490 °C, 500 °C, 510 °C, 520 °C or 530 °C.

In the lightening section, the pressure of the cracking feedstock and water is 10-40 MPa, preferably 15-30 MPa, and more preferably 21-30 MPa.

As is known in the art, the critical temperature of water is about 374 °C and the critical pressure of water is about 22.1 megapascals (MPa). Supercritical water is water that has a temperature equal to or higher than the critical temperature of water and has a pressure equal to or higher the critical pressure of water. In the lightening section of the present application, water is in a near-critical or supercritical state. In the lightening section of the present application, the cracking feedstock (such as crude oil) reacts in the presence of near-critical or supercritical water, so that at least a portion of the heavy component macromolecules in the cracking feedstock is converted into smaller molecules to obtain a lightened mixture.

In some embodiments, the lightening section includes a lightening container such as a lightening kettle. Alternatively, the lightening section includes or is a section of a tubular reactor.

In some embodiments, multiple lightening reaction kettles can be connected in series or in parallel, wherein when some of the lightening reaction kettles are discharging reactants to the decomposition gasification section, cracking feedstock and water are being fed into some of the lightening reaction kettles, and some of the lightening reaction kettles are conducting lightening reactions. Thereby, a continuous and stable operation in subsequent sections of the cracking reaction device can be maintained.

In some embodiments, the pressurized and preheated cracking feedstock and water are fed into the lightening reaction kettle, and are reacted for 1-120 minutes under the conditions of 350-450 °C and 21-30 MPa to obtain a lightened mixture.

In some embodiments, the entire lightened mixture obtained enters the decomposition gasification section; or enters the decomposition gasification section after a solid residue and optionally a portion of water are separated.

The lightening section is followed by the reduced-pressure gasification section. The lightened mixture obtained from the lightening section is fed into the reduced-pressure gasification section. The lightened mixture obtained after lightening is sent into the reduced-pressure gasification section for reduced-pressure gasification and heating to obtain a completely or substantially completely gasified steam-containing mixture (a gaseous mixture).

In some embodiments, the reduction of pressure reduces the pressure of the lightened mixture to 0.01-0.5 MPa, preferably 0.1-0.4 MPa. For example, the pressure of the lightened mixture can be reduced to 0.02 MPa, 0.03 MPa, 0.04 MPa, 0.05 MPa, 0.06 MPa, 0.07 MPa, 0.08 MPa, 0.09 MPa, 0.1 MPa, 0.15 MPa, 0.2 MPa, 0.25 MPa, 0.3 MPa, 0.35 MPa, 0.4 MPa or 0.45 MPa. The heating in the reduced-pressure gasification section raises the temperature of the steam-containing mixture to, for example, 550-700 °C, preferably 550-650 °C. For example, the heating in the reduced-pressure gasification section raises the temperature of the steam-containing mixture to 560 °C, 570 °C, 580 °C, 590 °C, 600 °C, 610 °C, 620 °C, 630 °C, 640 °C, 650 °C, 660 °C, 670 °C, 680 °C or 690 °C.

In some embodiments, the reduced-pressure gasification section includes a reduced-pressure gasification container. Alternatively, the reduced-pressure gasification section includes or is a section of a tubular reactor.

In some embodiments, a pressure-reducing means is arranged between the lightening section and the reduced-pressure gasification section to reduce the pressure of the material entering into the reduced-pressure gasification section. Any pressure-reducing means capable of reducing pressure can be used. Preferably, the pressure-reducing means is a pressure reducing valve, a pressure control valve or a throttling element.

The reduced-pressure gasification section is followed by the cracking section. The steam-containing mixture (gaseous mixture) obtained from the reduced-pressure gasification section is sent into the cracking section. The materials undergo steam cracking treatment in the cracking section. In the cracking section, the materials are heated to a cracking temperature; preferably, the materials are heated to a temperature of 710-900 °C, preferably 770-880 °C, more preferably 780-820 °C; in the cracking section, the pressure is 0.01-0.5 MPa, preferably 0.1-0.4 MPa. For example, the materials are heated to 720 °C, 730 °C, 740 °C, 750 °C, 760 °C, 770 °C, 780 °C, 790 °C, 800 °C, 810 °C, 820 °C, 830 °C, 840 °C, 850 °C, 860 °C, 870 °C, 880 °C or 890 °C in the cracking section. For example, the pressure can be 0.02 MPa, 0.03 MPa, 0.04 MPa, 0.05 MPa, 0.06 MPa, 0.07 MPa, 0.08 MPa, 0.09 MPa, 0.1 MPa, 0.15 MPa, 0.2 MPa, 0.25 MPa, 0.3 MPa, 0.35 MPa, 0.4 MPa or 0.45 MPa in the cracking section.

As is known in the art, the residence time of the materials in the cracking section is relatively short. Those skilled in the art can appropriately select the required residence time. Preferably, the residence time of the materials in the cracking section is 0.1-0.5 seconds. For example, the residence time of the materials in the cracking section can be 0.1 seconds, 0.2 seconds, 0.3 seconds, 0.4 seconds or 0.5 seconds.

In some embodiments, the cracking section includes a cracker. The cracker may be a cracker commonly known in the art, such as a steam cracker. In some embodiments, the cracking section includes or is a section of a tubular reactor.

In some embodiments, the cracking reaction device can further include a quenching section after the cracking section. It is known in the art to quench the cracked product obtained after cracking. The quenching section is used to quickly cool the cracked product obtained by cracking to prevent the cracked product from coking due to staying at high temperature for a too long time. The quenching section can use equipments generally known in the art. In some embodiments, in the quenching section of the present application, within, for example, 0.1 seconds, the temperature of the cracked product is cooled to not higher than 550 °C, preferably cooled to 450-550 °C; and the pressure is 0.01-0.5 MPa, preferably 0.1-0.4 MPa.

Preferably, the cracking reaction device of the present application can include one or more reaction tubes, and each reaction tube includes said sequentially connected preheating section, lightening section, reduced-pressure gasification section and cracking section. That is, the preheating section, the lightening section, the reduced-pressure gasification section and the cracking section each form a part of the reaction tube and are sequentially connected to form the entire reaction tube. In such embodiments, the preheating section, the lightening section, the reduced-pressure gasification section and the cracking section can each be of a tube form.

In some embodiments, the preheating section, the lightening section, the reduced-pressure gasification section and the cracking section are each a part of a reaction tube and each has the same tube diameter. Alternatively, the preheating section, the lightening section, the reduced-pressure gasification section and the cracking section are each a part of a reaction tube, but their tube diameters can be the same as or different from each other.

For a reaction tube including the preheating section, the lightening section, the reduced-pressure gasification section and the cracking section connected sequentially, the length and diameter of each section can be suitably selected and set, for example, selected based on flow rate, volume, residence time and the like.

In present application, the arrangement of the reaction tubes can be horizontal type, vertical type or hanging type, or any other arrangements that can be adopted in the art.

Preferably, in present application, the temperatures of the preheating section, the lightening section, the reduced-pressure gasification section and the cracking section are sequentially increased. Preferably, the temperature increase between two adjacent sections of the preheating section, lightening section, decomposition gasification section and cracking section is in the range of 100-250 °C, preferably 150-250 °C. For example, preferably, the temperatures of the preheating section, the lightening section, the decomposition gasification section and the cracking section are 150-250 °C, 350-450 °C, 550-650 °C and 770-880 °C respectively.

In present application, there are no limitations to the heating manners of the cracking reaction device. For example, heating can be performed by heat exchange. Alternatively, heating can be performed by electrical heating or burning a combustible gas, for example. In present application, the type of the combustible gas is not limited; various combustible gases known in the art can be used. In some embodiments, the preheating section, the lightening section, the reduced-pressure gasification section and the cracking section are respectively equipped with temperature control means to control the temperature of each section.

In some embodiments, preferably, the preheating section includes or is a double-layer tube or a tube with more than two layers. In the case where the preheating section is a double-layer tube or a tube with more than two layers, the cracking feedstock and water can be arranged in different tubes or tube layers.

Preferably, helical protrusions are arranged on the inner side and/or the outer side of wall of the innermost layer tube, and/or on the inner side and/or the outer side of wall of the intermediate layer tube(s), and/or on the inner side of wall of the outmost layer tube of the double-layer tube or the tube with more than two layers.

In some embodiments, preferably, the helical protrusions in adjacent tube layers have opposite helical directions. For example, for a double-layer tube, if the helical protrusions on the inner side of wall of the inner layer tube are clockwise, the helical protrusions on the inner side of wall of the outer layer tube are counterclockwise; and vice versa.

When the preheating section is a tube with more than two layers, the preheating section can be a tube with three layers, four layers, five layers, six layers, etc. In present application, the inner space of the innermost tube is called the first tube layer, and from the inside to the outside, it is named as the first tube layer, the second tube layer, the third tube layer, the fourth tube layer, and so on. In present invention, the cracking feedstock and water enter different tube layers in the preheating section, respectively. For example, when the preheating section includes or is a double-layer tube, water can be fed into the inner layer tube (the first tube layer) and the cracking feedstock can be fed into the outer layer tube (the second tube layer). For example, when the preheating section includes a tube with three layers, the cracking feedstock can be fed into the first and third tube layers, and water can be fed into the second tube layer (i.e., the intermediate tube layer). Preferably, water is not fed into the outermost tube layer.

In some embodiments, helical protrusions are arranged on the inner side (inner surface) of the outer tube wall of each tube layer.

In present application, the preheating section can be heated externally. In the case of a double-layer tube with helical protrusions in opposite helical directions, water is fed into the inner layer tube (the first tube layer) and the cracking feedstock is fed into the outer layer tube (the second tube layer), so the sequence of heat transfer is the outer tube wall, the cracking feedstock, the inner tube wall and water. In the preheating section, the cracking feedstock and water produce opposite swirling flows under the action of the helical protrusions, which reduces the thickness of the retained layers near the tube walls and greatly enhances the mass transfer and heat transfer within the tube. When leaving the preheating section and entering into the lightening section, the cracking feedstock and water with opposite swirling flows are fully contacted with each other, which greatly increases the speed of lightening reaction. Moreover, the corrosion of the outer tube wall of the reaction tube caused by water to is greatly reduced, since the water entering into the leading part of the lightening section is at the center of the reaction tube, far away from the outer tube wall, and the temperature thereof is gradually increased to near or exceed the critical temperature.

In present application, the thickness of each tube layer of the double-layer tube or the tube with more than two layers can be set appropriately. For example, the thickness of each tube layer can be appropriately set according to the amount and flow rate of the cracking feedstock and water passing through the preheating section. In some embodiments, the ratio of the internal diameter of the inner layer tube to the internal diameter of the outer layer tube of the double-layer tube is 0.1-0.9, preferably 0.4-0.6. For example, the ratio of the internal diameter of the inner layer tube to the internal diameter of the outer layer tube of the double-layer tube can be 0.1, 0.2, 0.3, 0.4, 0.5, 0.6, 0.7, 0.8 or 0.9.

In some embodiments, the helical protrusions have a spiral height-to-diameter ratio (ratio of a single spiral turn height to spiral diameter) of 0.1-20, preferably 1-10. For example, said height-to-diameter ratio can be 0.2, 0.3, 0.4, 0.5, 0.6, 0.7, 0.8, 0.9, 1, 2, 3, 4, 5, 6, 7, 8, 9, 10, 11, 12, 13, 14, 15, 16, 17, 18 or 19. In some embodiments, the protrusion height-to-diameter ratio of the helical protrusions (for the innermost tube, it is the ratio of the helical protrusion height to the internal diameter of the tube; for other tube layers, it is the ratio of the helical protrusion height to the difference between the internal diameter of the outer layer and the external diameter of the inner layer of the tube layer) is 0.01-0.5, preferably 0.02-0.1. For example, the protrusion height to diameter ratio can be 0.02, 0.03, 0.04, 0.05, 0.06, 0.07, 0.08, 0.09, 0.1, 0.11, 0.12, 0.13, 0.14, 0.15, 0.16, 0.17, 0.18, 0.19, 0.2, 0.3 or 0.4.

The cross-section of the helical protrusions can take any commonly known shapes, such as rectangle, square, triangle, trapezoid, semicircle, semiellipse, etc. The helical protrusion height is defined as the height from the tube wall to the highest point of the cross-section of the helical protrusion.

The volumes of the preheating section, the lightening section, the reduced-pressure gasification section and the cracking section can be appropriately selected by those skilled in the art. In some embodiments, the volume ratio of the preheating section, the lightening section, the decomposition gasification section and the cracking section is 0.1-10 : 0.1-1000 : 0.1-10 : 1, preferably 0.1-7 : 1-300 : 0.1-7 : 1, preferably 0.1-5 : 1-300 : 0.1-7 : 1, preferably 0.1-0.5 : 1-300 : 0.1-0.5 : 1. For example, when the cracking reaction device includes reaction tubes and each reaction tube includes the preheating section, the lightening section, the reduced-pressure gasification section and the cracking section that are connected sequentially, the volumes can be adjusted by setting the tube length and/or tube diameter of each section.

Preferably, the present invention provides a cracking reaction device, which includes: a pressurizing section, a preheating section, a lightening section, a reduced-pressure gasification section, a cracking section and a quenching section that are sequentially connected, a cracking feedstock inlet and a cracked product outlet, the cracking feedstock inlet is arranged in the preheating section, and the cracked product outlet is arranged in the quenching section, wherein the preheating section, the lightening section, the reduced-pressure gasification section, the cracking section and the quenching section are each equipped with a temperature control means to control the temperature of each section during operation; a pressure-reducing means is arranged between the lightening section and the reduced-pressure gasification section to reduce the pressure of the materials entering into the reduced-pressure gasification section; the structure of the preheating section is a double-layer tube, and helical protrusions are arranged on the inner side of the inner layer tube wall and/or the inner side the outer layer tube wall of the double-layer tube.

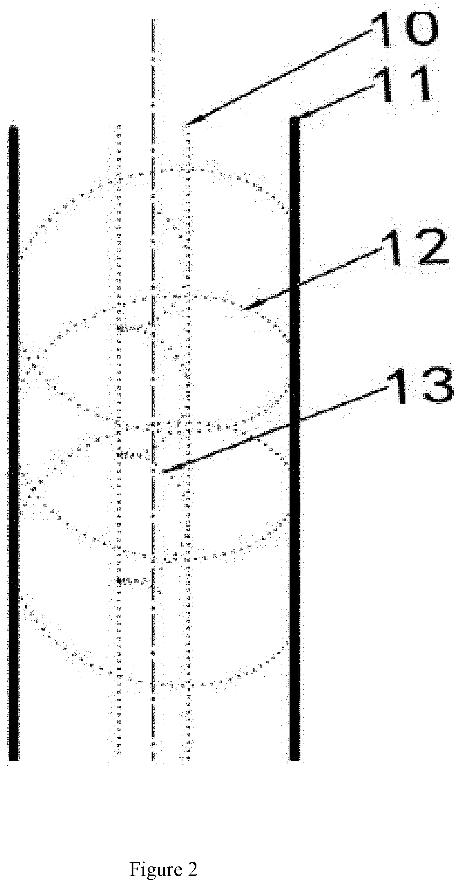

Figure 2 shows a preheating section that can be used in present application, which is a double-layer tube. The double-layer tube includes an inner layer tube 10 and an outer layer tube 11. The ratio of the internal diameter of the inner layer tube 10 to the internal diameter of the outer layer tube 11 can be 0.1-0.9, preferably 0.4-0.6. The inner side of the inner layer tube and the inner side of the outer layer tube are each provided with helical protrusions. The helical protrusions on the inner side of the inner layer tube have an opposite helical direction to that of the helical protrusions on the inner side of the outer layer tube. The spiral height-to-diameter ratio (ratio of single spiral turn height to spiral diameter) of the helical protrusions on the inner side of the inner layer tube is 0.1-20, preferably 1-10. The spiral height-to-diameter ratio (the ratio of single spiral turn height to spiral diameter) of the helical protrusions on the inner side of the outer layer tube is 0.1-20, preferably 1-10. The protrusion height-to-diameter ratio of the helical protrusions on the inner side of the inner layer tube (the ratio of the protrusion height to the internal diameter of the tube) is 0.01-0.5, preferably 0.02-0.1. The protrusion height-to-diameter ratio of the helical protrusions on the inner side of the outer layer tube (the ratio of the protrusion height to the difference between the internal diameter of the outer layer tube and the external diameter of the inner layer tube) is 0.01-0.5, preferably 0.02-0.1.

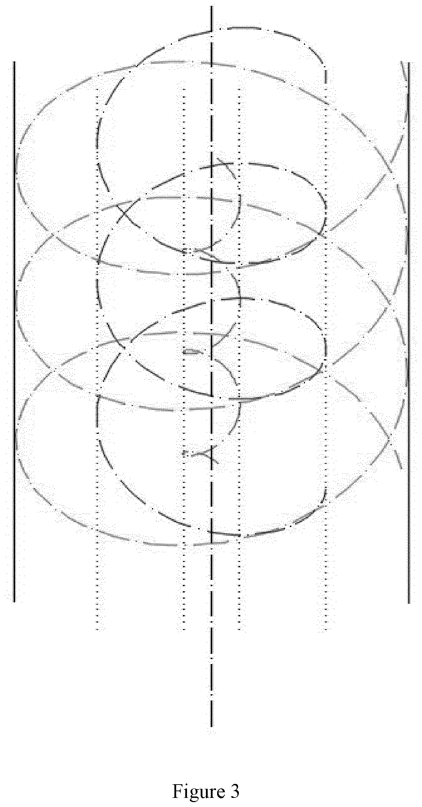

Figure 3 shows a preheating section that can be used in present application, which is a three-layer tube. The three-layer tube is provided with helical protrusions on the inner side of each layer of tube wall.

In some embodiments of the present invention, in the case where the preheating section includes or is a double-layer tube or a tube with more than two layers, the cracking feedstock and water can be fed into different tube layers of the preheating section, respectively. For example, in the case of a double-layer tube, the cracking feedstock and water can be fed into the inner layer tube and the tube layer between the inner and outer layer tubes of the preheating section, respectively. In the case of external heating, in the preheating section, water flows through the inner layer tube, and the cracking feedstock flows through between the inner and outer layer tubes. The sequence of heat transfer is as follows: outer layer tube, cracking feedstock, inner layer tube, and water. Corrosion of the outer tube wall of the reaction tube caused by water is greatly reduced, since the water entering into the leading part of the lightening section is at the center of the reaction tube, far away from the outer tube wall, and the temperature thereof is gradually increased to near or exceed the critical temperature. In addition, if there are helical protrusions, the cracking feedstock and water will produce opposite swirling flows under the action of the helical protrusions, which reduces the thickness of the retained layers near the tube walls and greatly enhances the mass transfer and heat transfer within the tube. When leaving the preheating section and entering into the lightening section, the cracking feedstock and water with opposite swirling flow reactions are fully contacted with each other, which greatly increases the speed of lightening reaction.

In some embodiments of the present invention, the volume ratio of the preheating section, the lightening section, the reduced-pressure gasification section, the quenching section and the cracking section is 0.1-10 : 0.1-1000 : 0.1-10 : 0.1-10 : 1, preferably 0.1-0.5 : 1-300 : 0.1-0.5 : 0.1-0.5 : 1.

In some embodiments of the present invention, the specific form of the pressure-reducing means is not limited, as long as the purpose of pressure reduction can be achieved. Preferably, the pressure-reducing means can be a pressure reducing valve, a pressure control valve or a throttling element.

In some embodiments of the invention, the pressurizing section is provided with a pressurizing equipment. Preferably, the pressurizing equipment is a pump.

In some embodiments of the invention, the cracking reaction device includes one or more reaction tubes. Specifically, each of the reaction tubes is arranged with a pressurizing section, a preheating section, a lightening section, a reduced-pressure gasification section, a cracking section and optionally a quenching section that are connected sequentially. The arrangement of the reaction tubes can be horizontal type, vertical type or hanging type.

In the present invention, there is no limitation to the heating manner of the cracking reaction device. For example, it can be heated by electrical heating or by burning a combustible gas with a bottom burner. The type of the combustible gas is not particularly limited in the present invention, and various available combustible gases known in the art can be used. The preheating section, the lightening section, the reduced-pressure gasification section, and the cracking section can each be equipped with a temperature control means to control the temperature of each section to increase sequentially during operation, and the temperature increase is preferably in the range of 150-250 °C. For example, the preheating section, the lightening section, the reduced-pressure gasification section, the cracking section, and the quenching section are each equipped with a temperature control means to control the temperature of each section to be 150°C-250 °C, 350-450 °C, 550-650 °C, 770-880 °C, 450-550 °C, respectively, during operation.

In the present invention, the product obtained in a section can be separated, and a part of the product can be sent into the next section to continue the subsequent process, which also falls into the protection scope of the present invention.

In some embodiments, in the case where the cracking reaction device includes reaction tubes and each reaction tube includes said sequentially connected preheating section, lightening section, reduced-pressure gasification section and cracking section, there is no product separation operation between any two sections; that is, all the products of an upstream section are fed into the downstream section following the upstream section.

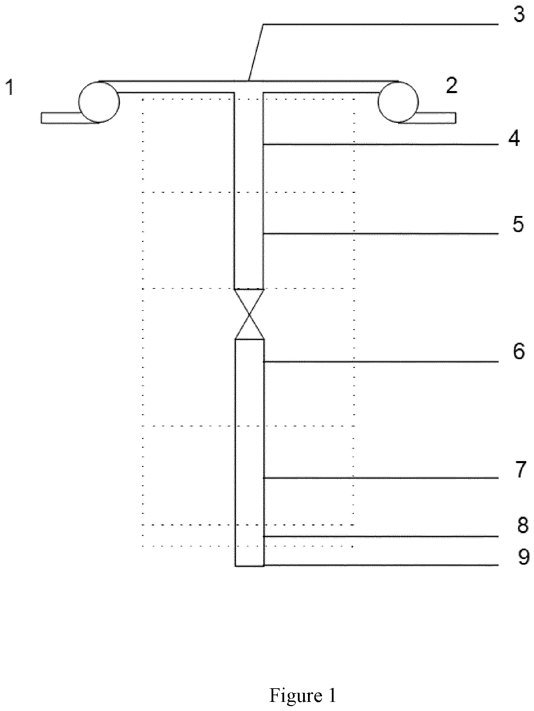

According to a specific embodiment of the present invention, with reference to Figure 1, a cracking reaction device is shown. The cracking reaction device includes: a pressurizing section (in this embodiment, pressurization is achieved through pressurizing equipment, that is, the water pump 1 and the crude oil pump 2 in Figure 1), a preheating section 4, a lightening section 5, a reduced-pressure gasification section 6, a cracking section 7 and quenching section 8 that are connected sequentially, an inlet 3, and a cracked product outlet 9. The inlet 3 is arranged in the preheating section 4, and the cracked product outlet 9 is arranged in the quenching section 8. Optionally, the preheating section 4, the lightening section 5, the reduced-pressure gasification section 6, the cracking section 7 and the quenching section 8 are each equipped with a temperature control means to control the temperature each section during operation. A pressure-reducing means is arranged between the lightening section and the reduced-pressure gasification section to reduce the pressure of the lightened mixture entering into the reduced-pressure gasification section. As shown in the Figure, the preheating section 4, the lightening section 5, the reduced-pressure gasification section 6, the cracking section 7 and the quenching section 8 form a tubular reactor.

Another aspect of the present invention provides a method for producing olefins through cracking, characterized in that the method includes the following steps:
(1) pressurizing a cracking feedstock and water;
(2) subjecting the pressurized cracking feedstock and water to a first heating (preheating);
(3) subjecting the first heated cracking feedstock and water to a second heating and lightening the cracking feedstock in the presence of water to obtain a lightened mixture;
(4) gasifying the lightened mixture under a reduced pressure and subjected to a third heating to obtain a third heated mixture (reduced-pressure gasification); and
(5) cracking the third heated mixture at a cracking temperature in the presence of steam to obtain a cracked product containing olefins.

Another aspect of the present invention provides a method for producing olefins through cracking, which method includes:
(1) pressurizing a cracking feedstock and water;
(2) subjecting the pressurized cracking feedstock and water to a first heating (preheating);
(3) subjecting the first heated cracking feedstock and water to a second heating and lightening the cracking feedstock in the presence of water to obtain a lightened mixture;
(4) gasifying the lightened mixture under a reduced pressure and subjected to a third heating (reduced-pressure gasification), to obtain a third heated mixture containing steam and lightening reaction product of the cracking feedstock; and
(5) cracking the third heated mixture in the presence of steam to obtain a cracked product containing olefins; and
(6) cooling the cracked product.

In some embodiments, the temperatures of the first heating, the second heating, the third heating and the cracking are sequentially increased. Preferably, from step (2) to step (5), the temperature increase between adjacent steps is in the range of 150-250 °C.

In some embodiments of the present invention, the temperatures of the first heating, the second heating, the third heating and the cracking are sequentially increased and the increase is within the range of 150-250 °C, preferably within the range of 150-250 °C. In some embodiments, preferably, the temperatures of the first heating, the second heating, the third heating and the cracking are 150-250 °C, 350-450 °C, 550-650 °C and 770-880 °C, respectively.

In some embodiments of the present invention, in step (1), the weight ratio of water to the cracking feedstock is 0.3-10.5, preferably 0.5-5. For example, the weight ratio of water to the cracking feedstock can be 0.3, 0.4, 0.5, 0.6, 0.7, 0.8, 0.9, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.5, 4 or 4.5.

In the present invention, the forward reaction of cracking increases the number of moles. Both the lowering of pressure and addition of water (as steam under reaction conditions) can reduce the partial pressure of hydrocarbons, which contributes to promoting the forward reaction and increasing the conversion rate.

In present application, the cracking feedstock can include at least one of crude oil, residual oil, and heavy hydrocarbons obtained by processing crude oil. The residual oil can include atmospheric residual oil and vacuum residual oil. In some embodiments of the present invention, the cracking feedstock is crude oil.

In the present invention, any water commonly used in petrochemical processes can be used. For example, deionized water, recycled water, regenerated water or the like can be used.

In the pressurizing step (step (1)), the cracking feedstock and water are pressurized to a required pressure. According to some embodiments, the cracking feedstock and water are pressurized to 10-40 MPa, preferably 15-30 MPa, more preferably 21-30 MPa. According to some embodiments, the pressure can be 15 MPa, 16 MPa, 17 MPa, 18 MPa, 19 MPa, 20 MPa, 21 MPa, 22 MPa, 23 MPa, 24 MPa, 25 MPa, 26 MPa, 27 MPa, 28 MPa, 29 MPa, 30 MPa, 31 MPa, 32 MPa, 33 MPa, 34 MPa, 35 MPa, 36 MPa, 37 MPa, 38 MPa or 39 MPa.

The pressurizing step can be performed in pipeline(s) for transporting the cracking feedstock and water. For example, the pressurization can be performed in pipeline(s) that delivers the cracking feedstock and water to the preheating step. The pressurizing can be performed by a pressurizing equipment known in the art. Preferably, the pressurizing equipment is a pump.

After the cracking feedstock and water are pressurized, they are preheated, that is, the preheating step (step (2)).

The preheating step is used to preheat the materials, including the cracking feedstock and water. In the preheating step, the materials to be preheated, such as the cracking feedstock and water, are heated to a desired temperature, such as a temperature not higher than 350°C. In some embodiments, the preheating step heats the materials to a temperature of, for example, 150-250 °C. For example, the preheating section heats the materials to 150 °C, 160 °C, 170 °C, 180 °C, 190 °C, 200 °C, 210 °C, 220 °C, 230 °C, 240 °C, 250 °C, 260 °C, 270 °C, 280 °C, 290 °C, 300 °C, 310 °C, 320 °C, 330 °C or 340 °C.

In some embodiments, the preheating step includes the use of a heating container and/or a heat exchanger. In the case of using a heating container, after the pressurized cracking feedstock and water are fed into the heating container, the cracking feedstock and water are heated to a desired temperature in the heating container. In the case of using a heat exchanger, the cracking feedstock and water are heated to the desired temperature through heat exchange. In some embodiments, the preheating step can be a section of a tubular reactor (i.e., preheating section of tubular reactor).

In the preheating step, the pressure of the materials (the cracking feedstock and water) is 10-40 MPa, preferably 15-30 MPa, more preferably 21-30 MPa. In some embodiments, the pressure in the preheating step can be the same as the pressure in the pressurizing step.

In the present invention, the cracking feedstock can be pressurized and preheated separately, and the water can be pressurized and preheated separately, and then the pressurized and preheated cracking feedstock and the pressurized and preheated water are mixed together. Alternatively, the cracking feedstock can be pressurized separately and the water can be pressurized separately; the pressurized cracking feedstock and pressurized water are then mixed together to obtain a mixture; and the obtained mixture is heated to a desired preheating temperature. Alternatively, the cracking feedstock can be mixed with water, and the mixture can be pressurized and preheated. For example, the cracking feedstock and water can be added into a container to obtain a mixture, and then the mixture in the container is pressurized and preheated. In some embodiments, step (1) and step (2) can be combined into one step.

In some embodiments of the present invention, after pressurization, the pressure of the cracking feedstock and water is: 10-40 MPa, preferably 15-30 MPa, more preferably 21-30 MPa. In the present invention, the cracking feedstock and water can be pressurized to 10-40 MPa, preferably 15-30 MPa, and more preferably 21-30 MPa, separately. In the present invention, alternatively, the cracking feedstock and water are mixed together and pressurized to 10-40 MPa, preferably 15-30 MPa, and more preferably 21-30 MPa.

In the present invention, the pressurization is conducted for keeping water and crude oil in liquid state during the lightening reaction; and for achieving a near-critical or supercritical state of water; in this state, mass transfer, heat transfer and reaction are all enhanced, and the lightening reaction speed is high and it is not easy to coke.

In the present invention, in order to prevent the cracking feedstock from reaching high temperature too early, resulting in coking due to staying at high temperature for a too long time, and at the same time, in order to prevent water from reaching the supercritical state too early, resulting in corrosion of the device, a preheating step is provided before the lightening treatment. In the preheating step (step (2)), the conditions for the first heating include: the temperature is increased to not more than 350 °C, preferably 150-250 °C; and the pressure is 10-40 MPa, preferably 15-30 MPa, more preferably 21-30 MPa.

In the method of the present application, the preheating step is followed by a lightening treatment step. In present application, "lightening" refers to treatment of materials at temperature and pressure of supercritical water or close to supercritical water.

In some embodiments of the present invention, in step (3) (lightening treatment step), the conditions for the lightening treatment can include: a temperature of 350-450 °C, a pressure of 10-40 MPa, preferably 15-30 MPa, more preferably 21-30 MPa. The time of the lightening treatment can be appropriately selected to obtain the desired lightening treatment product. For example, the treatment time of the lightening step can be from 0.2 minutes to 240 minutes, preferably from 0.5 minutes to 60 minutes, and more preferably from 1 to 10 minutes.

In some embodiments, in the lightening section, the cracking feedstock and water are further heated, for example, heated to a temperature of 300-540 °C, preferably 300-500 °C, more preferably 350-450 °C. For example, in the lightening section, the cracking feedstock and water are heated to 310°C, 320°C, 330°C, 340°C, 350°C, 360°C, 370°C, 380°C, 390°C, 400°C, 410°C, 420°C, 430°C, 440°C, 450°C, 460°C, 470°C, 480°C, 490°C, 500°C, 510°C, 520°C or 530°C.

In the lightening treatment step, the cracking feedstock (such as crude oil) and water react (being lightened) under temperature and pressure of supercritical water or close to supercritical water, so that at least a part of heavy component macromolecules in the cracking feedstock are converted into smaller molecules, making it more suitable as raw material for steam thermal cracking. The water required for lightening can also serves as diluting steam during the cracking stage. The mixture obtained after the lightening reaction (lightened mixture) comprises steam and the lightening reaction product of the cracking feedstock.

In the lightening treatment step, the cracking feedstock and water from the preheating step are further heated, for example, heated to a temperature of 350-450 °C. In the lightening treatment step, the pressure of the cracking feedstock and water is 10-40 MPa, preferably 15-30 MPa, and more preferably 21-30 MPa. In some embodiments, the pressure in the lightening treatment step can be the same as the pressure in the preheating step and/or the pressure in the pressurizing step.

In the lightening treatment step of the present application, water is in a near-critical or supercritical state. In the lightening treatment step of the present application, the cracking feedstock (such as crude oil) reacts in the presence of near-critical or supercritical water, so that at least a part of heavy component macromolecules in the cracking feedstock is converted into smaller molecules to obtain a lightened mixture.

In some embodiments, the lightening treatment step is performed in a lightening container, such as a lightening reaction kettle. Alternatively, the lightening treatment step is carried out in a tubular reactor (i.e., the lightening section of a tubular reactor).

In some embodiments, a plurality of lightening reaction kettles can be connected in series or in parallel. When some of the lightening reaction kettles are discharging reactants to the decomposition gasification section, cracking feedstock and water are being fed into some of the lightening reaction kettles, and some of the lightening reaction kettles are conducting lightening reactions, to maintain a continuous and stable operation of the method of the present application.

In some embodiments, the pressurized and preheated cracking feedstock and water react in the lightening treatment step under conditions of 350-450 °C and 21-30 MPa for 1-120 minutes to obtain a lightened mixture.

The method of the present application further comprises a reduced-pressure gasification step (step (4)) after the lightening treatment, to obtain a gaseous mixture. In some embodiments of the present invention, in order to increase the olefin yield, in step (4), the reduction of pressure reduces the pressure of the mixture obtained after the lightening reaction to 0.01-0.5 MPa, preferably 0.1-0.4 MPa. For example, the pressure of the mixture can be reduced to 0.02 MPa, 0.03 MPa, 0.04 MPa, 0.05 MPa, 0.06 MPa, 0.07 MPa, 0.08 MPa, 0.09 MPa, 0.1 MPa, 0.15 MPa, 0.2 MPa, 0.25 MPa, 0.3 MPa, 0.35 MPa, 0.4 MPa or 0.45 MPa.

It should be noted that, in the reduced-pressure gasification step (step (4)) in the method of the present application, although the pressure of the mixture obtained after the lightening reaction (lightened mixture) decreases, the temperature does not decrease. Preferably, while or after reducing the pressure of the mixture obtained after the lightening reaction, the third heating is performed so that the temperature of the mixture obtained after the lightening reaction is further increased, preferably increased to 550-650 °C. The heating in the reduced-pressure gasification section raises the temperature of the mixture to, for example, 550-700 °C, preferably 550-650 °C. For example, the heating in the reduced-pressure gasification section raises the temperature of the mixture to 560 °C, 570 °C, 580 °C, 590 °C, 600 °C, 610 °C, 620 °C, 630°C, 640 °C, 650 °C, 660 °C, 670 °C, 680 °C or 690 °C.

In some embodiments, the reduced-pressure gasification step is performed in a reduced-pressure gasification container. Alternatively, the reduced-pressure gasification step is performed in a tubular reactor (i.e., the reduced-pressure gasification section of the tubular reactor).

In the method of the present application, after reduced-pressure gasification, the mixture (gaseous mixture) obtained by reduced-pressure gasification is subjected to steam cracking (step (5), cracking step).

In the method of the present invention, the cracking reaction is a reaction system with strong endotherm, increased molar number, and a large number of side reactions. Therefore, high temperature, low pressure, and short residence time are process conditions facilitating the production of olefins through the cracking reaction.

Steam cracking is an operation known in the art. Those skilled in the art can reasonably select the conditions required for the cracking operation based on the feedstock to be cracked and the desired cracked products. For example, specifically, in the steam cracking step (step (5)), the conditions for the cracking reaction include: a temperature of 770-880 °C, preferably 780-820 °C, a pressure of 0.01-0.5 MPa, preferably 0.2-0.3 MPa, and a residence time of 0.1-0.5 seconds. In the cracking section, the materials are heated to a cracking temperature; preferably, the materials are heated to a temperature of 710-900 °C, preferably 770-880 °C, and more preferably 780-820 °C. In the cracking section, the pressure is 0.01-0.5 MPa, preferably 0.1-0.4 MPa. For example, in the cracking section, the materials are heated to 720 °C, 730 °C, 740 °C, 750 °C, 760 °C, 770 °C, 780 °C, 790 °C, 800 °C, 810 °C, 820 °C, 830 °C, 840 °C, 850 °C, 860 °C, 870 °C, 880 °C or 890 °C. For example, in the cracking section, the pressure can be 0.02 MPa, 0.03 MPa, 0.04 MPa, 0.05 MPa, 0.06 MPa, 0.07 MPa, 0.08 MPa, 0.09 MPa, 0.1 MPa, 0.15 MPa, 0.2 MPa, 0.25 MPa, 0.3 MPa, 0.35 MPa, 0.4 MPa or 0.45 MPa. For example, the residence time of the materials in the cracking section can be 0.1 seconds, 0.2 seconds, 0.3 seconds, 0.4 seconds or 0.5 seconds.

In some embodiments, the cracking step is performed in a cracker. The cracker can be a cracker commonly known in the art, such as a steam cracker. In some embodiments, the cracking step is performed in a tubular reactor (i.e., the cracking section of a tubular reactor).

Optionally, the method of the present application can also include a cooling (quenching) step after the cracking step. The cooling (quenching) of the cracked product after cracking is known in the art.

Those skilled in the art can reasonably select the conditions required for cooling based on the cracked product. In some embodiments of the present invention, in the cooling step (step (6)), within 0.1 seconds, the cooling makes the temperature of the cracked product not higher than 550 °C (for example, cooled to 450-550 °C), and the pressure is 0.01-0.5 MPa, preferably 0.2-0.3 MPa.

In some embodiments, the quenching step can be performed in a quenching equipment commonly known in the art.

In the present invention, the method of the present application can be carried out in the above-mentioned cracking reaction device of the present application. Wherein, the pressurizing section is used to pressurize the cracking feedstock and water. The preheating section is used to subject the pressurized cracking feedstock and water to the first heating. The lightening section is used to subject the first heated cracking feedstock and water to the second heating, and subject the cracking feedstock to undergo a lightening reaction in the presence of supercritical water or near-critical water. The reduced-pressure gasification section is used to depressurize the mixture obtained after the lightening reaction and to perform the third heating to obtain the third heated mixture containing steam and the lightening reaction product of the cracking feedstock. The cracking section is used to subject the mixture to cracking reaction in the presence of steam. The quenching section is used to quickly cool the cracked product obtained after the cracking reaction, to prevent the reaction feedstock from coking due to staying at high temperature for a too long time.

According to a preferred embodiment, steps (2) to (5) of the method of the present application (i.e., the preheating step, the lightening treatment step, the reduced-pressure gasification step and the cracking step) are conducted in the cracking reaction device including a reaction tube as described above, wherein the reaction tube includes a preheating section, a lightening section, a reduced-pressure gasification section and a cracking section that are connected sequentially to perform the preheating step, the lightening step, the reduced-pressure gasification step and the cracking step, respectively. More preferably, when using the cracking reaction device including a reaction tube, there is no operation to separate the product between the steps of the preheating step, the lightening treatment step, the reduced-pressure gasification step and the cracking step; that is, the product from an upstream step is entirely fed into the following downstream step.

As appreciated by those skilled in the art, the cracking reaction device described above in the present application can be used in the method of the present application. Therefore, the features described in relation to the device of the present application can also be applied to the method of the present application, if applicable; and vice versa.

In the present application, the temperature or pressure range provided for each section or step is the temperature or pressure that is expected to be achieved in the section or step. However, as known by those skilled in the art, the achievement of a temperature or pressure value requires a process. For example, if the preheating step heats the material to a temperature of 200°C, the temperature of the material will be lower than 200°C at the beginning of heating, and will increase to 200°C as the heating proceeds. For example, when the preheating step is carried out in a tubular reactor (tube preheating section), the material has a temperature lower than 200°C at the inlet of the tube preheating section, and as the material flows through in the tube, its temperature rises and reaches 200°C. For example, for a double-layer tube, the materials in the inner and outer tube layers are gradually heated in the preheating section, and the average temperature at the outlet of the preheating section reaches 200 °C.

The third aspect of the present invention provides use of the above-mentioned cracking reaction device of the present application in preparing of olefins through cracking. For example, the cracking reaction device of the present application can be used for cracking of heavy feedstocks such as crude oil, preferably steam cracking.

In the present invention, the pressure is absolute pressure.

In the present invention, the lower olefins prepared by cracking include ethylene, propylene and butadiene.

### Examples

The present invention will be described in detail below by examples.

The composition of the crude oil used in the following examples and comparative examples is shown in Table 1. The composition was measured according to simulated distillation analysis method ASTM D5307. Measurements were performed with Agilent 7890 gas chromatograph.

**Table 1**

| Analysis Item | ASTM D5307 |
|---|---|
| IP, °C | 69 |
| 10%, °C | 192 |
| 20%, °C | 272 |
| 30%, °C | 337 |
| 40%, °C | 393 |
| 50%, °C | 446 |
| 60%, °C | 508 |
| 70%, °C | 595 |
| 75%, °C | 653 |
| 80%, °C | - |
| 90%, °C | - |
| EP, °C | - |

| | |
|---|---|
| Note: "-" means it cannot be measured. | |

### Lightening Examples

Crude oil and water were lightened in supercritical or near-supercritical water in a tubular lightening reaction device and a stirred reactor respectively. The results are shown in Table A and Table B. The reaction devices and conditions are as follows: lightened crude oil a (tubular lightening reaction device composed of the preheating section and the lightening section of Example 1 in Table 2; water-to-oil ratio 1.5; preheating section temperature 250 °C, pressure 27 MPa; lightening section temperature 440 °C, pressure 27 MPa, residence time 15 min); lightened crude oil b (the reaction device is the same as that of lightened crude oil a; water-to-oil ratio 1.5; preheating section temperature 250 °C, pressure 24 MPa; lightening section temperature 430 °C, pressure 24 MPa, residence time 15 min); lightened crude oil c ( 11 OmL stirred tank type lightening reactor, water amount 28g, water-to-oil ratio 1.5, 430 °C, 32MPa, stirring speed 600r/min, reaction time 15min); lightened crude oil d (tubular lightening reaction device composed of the preheating section and the lightening section of Example 1 in Table 2 but without helical structures, water-to-oil ratio 1.5, preheating section temperature 250 °C, pressure 30 MPa; lightening section 430 °C, 30 MPa, residence time 15 min).

**Table A**

| ASTM D5307 | Crude oil | Lightened crude oil a | Lightened crude oil b | Lightened crude oil c | Lightened crude oil d |
|---|---|---|---|---|---|
| IP, °C | 69 | 5 | 9 | 12 | 69 |
| 10%, °C | 192 | 105 | 128 | 161 | 192 |
| 20%, °C | 272 | 152 | 198 | 217 | 271 |
| 30%, °C | 337 | 210 | 250 | 269 | 328 |
| 40%, °C | 393 | 245 | 286 | 315 | 368 |
| 50%, °C | 446 | 278 | 316 | 357 | 402 |
| 60%, °C | 508 | 311 | 352 | 401 | 436 |
| 70%, °C | 595 | 346 | 387 | 441 | 473 |
| 75%, °C | 653 | 368 | 406 | 465 | 497 |
| 80%, °C | - | 390 | 428 | 492 | 524 |
| 90%, °C | - | 444 | 489 | 565 | 591 |
| 96%, °C | - | 500 | 562 | - | - |

**Table B**

| boiling point decrease | Lightened crude oil a | Lightened crude oil b | Lightened crude oil c | Lightened crude oil d |
|---|---|---|---|---|
| IP | 92.75 | 86.96 | 82.61 | 0.00 |
| 10% | 45.31 | 33.33 | 16.15 | 0.00 |
| 20% | 44.12 | 27.21 | 20.22 | 0.37 |
| 30% | 37.69 | 25.82 | 20.18 | 2.67 |
| 40% | 37.66 | 27.23 | 19.85 | 6.36 |
| 50% | 37.67 | 29.15 | 19.96 | 9.87 |
| 60% | 38.78 | 30.71 | 21.06 | 14.17 |
| 70% | 41.85 | 34.96 | 25.88 | 20.50 |
| 75% | 43.64 | 37.83 | 28.79 | 23.89 |
| Light components increase % | 166.67 | 100.00 | 66.67 | 0.00 |
| heavy components decrease % | 90.00 | 80.00 | 52.50 | 37.50 |

| | | | | |
|---|---|---|---|---|
| Note: Light components are the sum of components with a boiling point lower than 220°C, and heavy components are the sum of components with a boiling point higher than 500°C. | | | | |

From the results in Table A, the light components in the crude oil were increased from about 12% to 32%, 24%, 20% and 12% respectively; and the heavy components in the crude oil were decreased from about 40% to 4%, 8%, 19% and 25%. Correspondingly, the light components in the crude oil were increased by 166.7%, 100%, 66.7% and 0%, while the heavy components in the crude oil were decreased by 90%, 80%, 52.5% and 37.5%.

It can be seen from the simulated distillation data of the crude oil before and after lightening treatment that after the crude oil undergoes lightening reaction, a portion of heavy components are converted into light components.

### Examples 1-6

Lower olefins were produced from crude oil and water in the cracking reaction device of the present application. The cracking reaction device includes: a water pump, a crude oil pump, an inlet, a preheating section, a lightening section, a reduced-pressure gasification section, a cracking section and a quenching section, and a cracked product outlet that are connected sequentially. The preheating section, the lightening section, the reduced-pressure gasification section, the cracking section and the quenching section are arranged as a tubular reactor. The structure of the preheating section is a double-layer tube, and the inner sides of walls of the double-layer tube are provided with helical protrusions in opposite directions (the cross-sectional shape is rectangular and the width is 1 mm). The cracking feedstock and water were fed into the cracking reaction device and were sequentially subjected to the pressurization, the first heating (preheating), the second heating (lightening), the third heating (reduced-pressure gasification), cracking and cooling. The water pump and the crude oil pump were used to pressurize the cracking feedstock and water; the preheating section was used to perform the first heating of the pressurized cracking feedstock and water; the cracking feedstock and water were fed into the preheating section through the inlet, wherein the water flowed through the inner layer tube of the preheating section, and the cracking feedstock flowed through between the inner layer tube and outer layer tube of the preheating section; the lightening section was used to conduct the second heating of the first heated cracking feedstock and water, and to make the cracking feedstock undergo the lightening reaction in the presence of water; the reduced-pressure gasification section was used to reduce the pressure the mixture obtained after the lightening reaction and then perform the third heating to obtain the third heated mixture containing steam and the lightening reaction product of the cracking feedstock; the cracking section was used to make the third heated mixture undergo cracking reaction in the presence of steam; and the quenching section was used to cool the cracked product obtained after the cracking reaction, and the cracking reaction product was taken out from the cracked product outlet in the quenching section.

The specifications of the cracking reaction device are shown in Table 2; and the process parameters of each section are shown in Table 3. Cracking was carried out with crude oil and water as raw materials under conditions of specific weight ratios of feedstock and water, temperatures in each section, and pressures in each section. The results of the cracked product (olefins) are shown in Table 4.

In Examples 1-6, the cracking section is a tube with an internal diameter of 10 mm and a length of 1 meter.

In Examples 1-6, the tube internal diameter of each section is 10 mm, with an exception that the tube internal diameter of the lightening section in Example 6 is 32 mm.

**Table 2 Structural parameters of each tubular cracking device**

| Item | | Example 1 | Example 2 | Example 3 | Example 4 | Example 5 | Example 6 |
|---|---|---|---|---|---|---|---|
| volume ratio of each section to cracking section | preheating section | 0.3 | 0.1 | 0.5 | 8 | 10 | 0.3 |
| | lightening segment | 2 | 1 | 3 | 0.1 | 10 | 40 |
| | reduced-pressure gasification section | 0.3 | 0.1 | 0.5 | 8 | 10 | 0.3 |
| | quenching section | 0.3 | 0.1 | 0.5 | 8 | 10 | 0.3 |
| double-layer tube related parameters | ratio of the internal diameter of the inner layer tube to the internal diameter of the outer layer tube | 0.5 | 0.4 | 0.6 | 0.1 | 0.9 | 0.5 |
| | spiral height-to-diameter ratio of the helical protrusion on the inner side of the inner layer tube | 5 | 1 | 10 | 0.1 | 20 | 5 |
| | number of inner spiral turns | 5 | 1 | 10 | 0.1 | 20 | 5 |
| | helical protrusion height-to-diameter ratio of the inner side of the inner layer tube | 0.05 | 0.02 | 0.1 | 0.01 | 0.5 | 0.05 |
| | spiral height-to-diameter ratio of the helical protrusions on the inner side of the outer layer tube | 5 | 1 | 10 | 0.1 | 20 | 5 |
| | number of outer spiral turns | 5 | 1 | 10 | 0.1 | 20 | 5 |
| | helical protrusion height-to-diameter ratio of the inner side of the outer layer tube | 0.05 | 0.02 | 0.1 | 0.01 | 0.5 | 0.05 |
| | inner helical direction | counterclockwise | clockwise | counterclockwise | clockwise | counterclockwise | Counterclockwise |

**Table 3**

| Item | Unit | Example 1 | Example 2 | Example 3 | Example 4 | Example 5 | Example 6 |
|---|---|---|---|---|---|---|---|
| pressurizing section pressure | MPa | 25 | 21 | 30 | 10 | 40 | 20 |
| preheating section temperature | °C | 200 | 150 | 250 | 100 | 340 | 200 |
| preheating section pressure | MPa | 25 | 21 | 30 | 10 | 40 | 20 |
| lightening section temperature | °C | 400 | 350 | 450 | 300 | 500 | 440 |
| lightening section pressure | MPa | 25 | 21 | 30 | 10 | 40 | 20 |
| reduced-pressure gasification section temperature | °C | 600 | 580 | 620 | 550 | 650 | 600 |
| reduced-pressure gasification section pressure | MPa | 0.2 | 0.1 | 0.4 | 0.01 | 0.5 | 0.2 |
| cracking section temperature | °C | 800 | 780 | 820 | 770 | 880 | 800 |
| cracking section pressure | MPa | 0.2 | 0.1 | 0.4 | 0.01 | 0.5 | 0.2 |
| residence time in cracking section | second | 0.2 | 0.1 | 0.3 | 0.1 | 0.5 | 0.2 |
| quenching section temperature | °C | 500 | 480 | 520 | 450 | 550 | 500 |
| quenching section pressure | MPa | 0.2 | 0.1 | 0.4 | 0.01 | 0.5 | 0.2 |
| water to oil ratio | / | 0.7 | 0.5 | 1 | 0.3 | 1.5 | 5 |

| | | | | | | | |
|---|---|---|---|---|---|---|---|
| Note: The quenching section temperature refers to the temperature of the cracked product after cooling, within 0.1 seconds. | | | | | | | |

### Comparative Example 1

With the SRT-IV type cracking reaction device known in the ethylene industrial device, cracking reaction was conducted using crude oil having a composition as shown in Table 1 as feedstock, the weight ratio of water to crude oil being 0.75, the outlet temperature of the radiant section of the cracking reaction device being 780 °C, the pressure being 0.27MPa, and the residence time being 0.2 seconds. The cracked product was collected, with olefin contents shown in Table 4.

The operation cycle of the cracking reaction device is defined as: the period from the time that the cracking reaction device starts to operation to the time that the operation has to be stopped for coke-burning. Ethylene yield (wt%) = weight of ethylene obtained from cracking/weight of crude oil fed×100% Propylene yield (wt%) = weight of propylene obtained from cracking/weight of crude oil fed×100% Butadiene yield (wt%) = weight of butadiene obtained from cracking/weight of crude oil fed×100% Total yiled of te three olefins (wt%) = ethylene yield+propylene yield+ butadiene yield

Specific results were summarized in Table 4.

**Table 4**

| Item | Unit | Example 1 | Example 2 | Example 3 | Example 4 | Example 5 | Example 6 | Comparative Example 1 |
|---|---|---|---|---|---|---|---|---|
| Ethylene yield | wt% | 28.25 | 27.67 | 28.11 | 25.73 | 27.63 | 27.89 | 21.49 |
| Propylene yield | wt% | 13.65 | 13.98 | 13.1 | 13.47 | 11.25 | 13.53 | 13.29 |
| Butadiene yield | wt% | 4.55 | 4.12 | 4.65 | 4.65 | 5.02 | 4.36 | 4.03 |
| Total yield of the three olefins | wt% | 46.45 | 45.77 | 45.86 | 43.85 | 43.9 | 45.78 | 38.81 |
| Operation cycle | day | 51 | 53 | 35 | 5 | 8 | 44 | 0.5 |

It can be seen from the results in Table 4 that in Examples 1-6 using the technical solutions of the present invention, the yields of the obtained ethylene, propylene and butadiene were higher, the total yield of the three olefins was also higher, and the device operation time was long. In comparative Example 1 not adopting the technical solution of the present invention, the yields of the obtained ethylene, propylene and butadiene were lower, and the total yield of the three olefins was also lower. The device operation cycle only lasted 12 hours, and the reaction tube had to be coke-burned due to too severe coking.

The preferred embodiments of the present invention have been described in detail above, but the present invention is not limited thereto. Within the scope of the technical concept of the present invention, many simple modifications can be made to the technical solutions of the present invention, including the combinations of various technical features in any other suitable manner. These simple modifications and combinations should also be deemed as disclosures disclosed by the present invention, and are all encompassed by the protection scope of the present invention.

## Claims

1. A cracking reaction device, **characterized in that** the cracking reaction device includes a preheating section, a lightening section, a reduced-pressure gasification section and a cracking section that are connected sequentially.

2. The cracking reaction device according to claim 1, wherein the lightening section includes a lightening container, preferably a lightening kettle.

3. The cracking reaction device according to claim 1 or 2, wherein the preheating section includes a heating container or a heat exchanger, and/or
the reduced-pressure gasification section includes a reduced-pressure gasification container, and/or
the cracking section includes a cracker.

4. The cracking reaction device according to claim 1, wherein the cracking reaction device includes one or more reaction tubes and each reaction tube includes said sequentially connected preheating section, lightening section, reduced-pressure gasification section and cracking section; optionally, the tube diameters of each section can be the same or different from each other.

5. The cracking reaction device according to any one of claims 1 to 4, wherein the cracking reaction device further includes a pressurizing section before the preheating section, and/or a quenching section after the cracking section.

6. The cracking reaction device according to any one of claims 1 to 5, wherein a pressure-reducing means is arranged between the lightening section and the reduced-pressure gasification section to reduce the pressure of the material entering into the reduced-pressure gasification section; preferably, the pressure-reducing means is a pressure reducing valve, a pressure control valve or a throttling element.

7. The cracking reaction device according to any one of claims 1 to 6, wherein the temperatures of the preheating section, the lightening section, the reduced-pressure gasification section and the cracking section are sequentially increased; preferably, the temperatures of the preheating section, the lightening section, the reduced-pressure gasification section and the cracking section are 150-250 °C, 350-450 °C, 550-650 °C and 770-880 °C, respectively.

8. The cracking reaction device according to any one of claims 1 to 7, wherein the preheating section is a double-layer tube or a tube with more than two layers.

9. The cracking reaction device according to claim 8, wherein helical protrusion(s) are arranged on the inner side and/or the outer side of wall of the inner layer tube, and/or on the tube wall(s) of the intermediate layer(s), and/or on the inner side of wall of the outer layer tube of the double-layer tube or the tube with more than two layers.

10. The cracking reaction device according to claim 8 or 9, wherein the ratio of the internal diameter of the inner layer tube to the internal diameter of the outer layer tube of the double-layer tube is 0.1-0.9, preferably 0.4-0.6;
and/or, the helical protrusions in adjacent tube layers have opposite helical directions;
and/or, the spiral height-to-diameter ratio of the helical protrusion is 0.1-20, preferably 1-10;
and/or, the protrusion height-to-diameter ratio of the helical protrusion is 0.01-0.5, preferably 0.02-0.1.

11. The cracking reaction device according to claim 5, wherein the pressurizing section is provided with a pressurizing equipment; preferably, the pressurizing equipment is a pump.

12. The cracking reaction device according to any one of claims 1-11, wherein the volume ratio of the preheating section, the lightening section, the reduced-pressure gasification section and the cracking section is 0.1-10:0.1-1000:0.1-10:1, preferably 0.1-0.5:1-300:0.1-0.5:1.

13. A cracking reaction device, **characterized in that** the cracking reaction device includes: a pressurizing section, a preheating section, a lightening section, a reduced-pressure gasification section, a cracking section and a quenching section that are sequentially connected, a cracking feedstock inlet and a cracked product outlet, the cracking feedstock inlet is arranged in the preheating section, and the cracked product outlet is arranged in the quenching section, wherein the preheating section, the lightening section, the reduced-pressure gasification section, the cracking section and the quenching section are each equipped with a temperature control means to control the temperature of each section during operation; a pressure-reducing means is arranged between the lightening section and the reduced-pressure gasification section to reduce the pressure of the material entering into the reduced-pressure gasification section; the structure of the preheating section is a double-layer tube, and helical protrusions are arranged on the inner side of wall of the inner layer tube and/or on the inner side of wall of the outer layer tube of the double-layer tube.

14. A method for producing olefins through cracking, **characterized in that** the method comprises the steps of:
(1) pressurizing a cracking feedstock and water;
(2) subjecting the pressurized cracking feedstock and water to a first heating;
(3) subjecting the first heated cracking feedstock and water to a second heating and lightening the cracking feedstock in the presence of water to obtain a lightened mixture;
(4) gasifying the lightened mixture under a reduced pressure and subjecting to a third heating to obtain a third heated mixture; and
(5) cracking the third heated mixture at a cracking temperature in the presence of steam to obtain a cracked product comprising olefins.

15. The method according to claim 14, wherein the temperatures of the first heating, the second heating, the third heating and the cracking are increased sequentially; preferably, from step (2) to step (5), the temperature increase between adjacent steps is in the range of 100-250°C, preferably 150-250°C; more preferably, the temperatures of the first heating, the second heating, the third heating and the cracking are 150-250 °C, 350-450 °C, 550-650 °C and 770-880 °C, respectively;
and/or, in step (1), the weight ratio of water and the cracking feedstock is 0.3-10.5, preferably 0.5-5;
and/or, the cracking feedstock is at least one of crude oil, residual oil, and heavy hydrocarbons obtained by processing of crude oil.

16. The method according to claim 14 or 15, wherein in step (1), after pressurization, the pressure of the cracking feedstock and water is 10-40 MPa, preferably 15-30 MPa, more preferably 21-30 MPa;
and/or, in step (2), the conditions for the first heating include: a temperature lower than 350 °C, preferably 150-250 °C; and a pressure of 10-40 MPa, preferably 15-30 MPa, more preferably 21-30 MPa.

17. The method according to any one of claims 14 to 16, wherein in step (3), the lightening is carried out under conditions of supercritical water or close to supercritical water; preferably, the conditions for the lightening include: a temperature of 300-500 °C, preferably 350-450 °C; and a pressure of 10-40 MPa, preferably 15-30 MPa, more preferably 21-30 MPa;
and/or, in step (4), the reduction of pressure reduces the pressure of the lightened mixture to 0.01-0.5 MPa, preferably 0.1-0.4 MPa; and the third heating raises the temperature of the lightened mixture to 550-700 °C, preferably 550-650 °C.

18. The method according to any one of claims 14 to 17, wherein in step (5), the conditions for cracking include: a temperature of 710-900 °C, preferably 770-880 °C, more preferably 780-820 °C, a pressure of 0.01-0.5 MPa, preferably 0.1-0.4MPa, and a residence time of 0.1-0.5 seconds.

19. The method according to any one of claims 14 to 18, wherein the method further comprises:
(6) cooling the cracked product obtained after the cracking reaction; preferably, in step (6), within 0.1 seconds, the cooling makes the temperature of the cracked product not higher than 550 °C, and the pressure is 0.01-0.5 MPa, preferably 0.1-0.4 MPa.

20. The method according to any one of claims 14 to 19, wherein the method is carried out in the cracking reaction device according to any one of claims 1 to 13.

21. Use of the cracking reaction device according to any one of claims 1 to 13 in preparing of olefins through cracking.
